# EUROPEAN PATENT APPLICATION

(11) **EP 2 672 366 A1**
(43) Date of publication of application: **11.12.2013**
(21) Application number: 12196965.3
(22) Date of filing: 13.12.2012
(51) Int. Cl.: G06F 3/041

(54) **Apparatus and method for displaying a screen using a flexible display**

(30) Priority: 04.06.2012 KR 20120059609
(71) Applicant: Samsung Electronics Co., Ltd, Gyeonggi-do 443-742 (KR)
(72) Inventor: Joo, Sangwoo, 443-742 Gyeonggi-do (KR)
(74) Representative: Birchenough, Lewis

(57) **Abstract**

A method of displaying a display screen by using a display that is flexible is disclosed. The method includes detecting deformation of the display; determining whether an object is displayed within a set range from a folding line at which the deformation is detected; and modifying the displayed objected and displaying the modified displayed object when the object is displayed within the set range.

## Description

### BACKGROUND OF THE INVENTION

### Field of the Invention

The present invention relates to an apparatus and method for displaying a display screen, and more particularly, to an apparatus and a method for a display screen using a flexible display.

### Description of the Related Art

As electronic devices become light weight and simplified, a touch screen in which a touch panel and a display panel are integrated with each other is widely used as a display device. Recently, attention has been drawn to the touch screen implemented in a flexible display. The flexible display is formed by replacing a glass substrate which surrounds a liquid crystal of a liquid crystal display (LCD) and an organic light-emitting diode (OLED) with a plastic film, thereby adding flexibility to allow for folding and unfolding. The flexible display is advantageous in that the flexible display is thin and light weight, as well as shock resistant, flexible, and capable of being bent and can be manufacture into a variety of forms. Also, the flexible display can be expected to have an extended application life span compared to glass due to its inherent flexibility which allows for a more durable, light weight and thinner display, thereby making it easier to handle and less likely to break if dropped. In addition, the flexible display can form a curved surface thereon allowing for a wider range of applications.

However, when using a flexible display, if the display is deformed, a difference occurs between an area visible to a user and an area the user intends to touch such that content located in a deformed portion can be difficult to be accurately recognized by the touch screen sensors. In addition, due to the aforementioned problems and/or disadvantages, the user may have difficulty in accurately selecting an icon or a button displayed on the deformed portion of the flexible touch screen such that operability and feeling in the use of the display is significantly reduced.

### SUMMARY OF THE INVENTION

An aspect of the present invention is to substantially solve at least the above problems and/or disadvantages and provide additional advantages, by providing an apparatus and a method for displaying a display screen whereby the accuracy of a user's perception of the location of an object on the display is maintained when the display is deformed.

Another aspect of the present invention is to accurately detect a selection input according to a user's intent even when a display is deformed, thereby improving the operability and the overall feel of the flexible display.

In accordance with an aspect of the present invention, displaying a display screen by using a display that is flexible includes: detecting a deformation of the display; determining whether an object is displayed within a set range from a folding line at which the deformation is detected; and modifying the displayed object and displaying the modified displayed object when the object is displayed within the set range.

In accordance with another aspect of the present invention, displaying a display screen by using a display that is flexible includes: detecting a deformation of the display; determining whether an object is displayed within a set range from a folding line at which the deformation is detected; and enlarging or moving a detection area for detecting an input for selecting the displayed object when the object is displayed within the set range.

In accordance with another aspect of the present invention, an apparatus for displaying a display screen using a display that is flexible includes: a display that is flexible; a sensor configured to detect a deformation of the display; and a controller configured to determine whether an object is displayed within a set range from a folding line at which the deformation is detected and configured to modify the displayed object and display the modified displayed object on the display when the object is displayed within the set range.

In accordance with another aspect of the present invention, an apparatus for displaying a display screen using a display that is flexible includes: a display that is flexible; a sensor configured to detect a deformation of the display; and a controller configured to determine whether an object is displayed within a set range from a folding line at which the deformation is detected and configured to enlarge or move a detection area for detecting an input to select the displayed object when the object is displayed within the set range.

### BRIEF DESCRIPTION OF THE DRAWINGS

The above features and advantages of the present invention will be more apparent from the following detailed description in conjunction with the accompanying drawings, in which:
FIG. 1 is a block diagram illustrating a configuration of a display screen apparatus according to an exemplary embodiment of the present invention;
FIG. 2 is a perspective view illustrating a range of an object to which a method applies when a display is deformed according to an exemplary embodiment of the present invention;
FIG. 3 is a perspective view illustrating an exemplary embodiment in which a displayed objected is enlarged according to a method of the present invention;
FIG. 4 is a perspective view illustrating an exemplary embodiment in which a displayed objected is moved according to a method of the present invention;
FIG. 5 is a perspective view illustrating an exemplary embodiment in which a detection range of a displayed object is enlarged or moved according to a method of the present invention;
FIG. 6 is a perspective view illustrating an exemplary embodiment in which an enlarged object is displayed without location change according to a method of the present invention;
FIG. 7 is a perspective view illustrating an exemplary embodiment in which an enlarged object is displayed in overlay according to an exemplary embodiment of the present invention;
FIG. 8 is a flowchart illustrating an exemplary embodiment in which an object is modified according to a method of the present invention;
FIG. 9 is a flowchart illustrating a process of modifying an object to be displayed according to a method in an exemplary embodiment of the present invention;
FIG. 10 is a flowchart illustrating a process of modifying a size of an object to be displayed according to a method in an exemplary embodiment of the present invention; and
FIG. 11 is a flowchart illustrating a process of enlarging or moving a detection area according to a method in another exemplary embodiment of the present invention.

### DETAILED DESCRIPTION OF EXEMPLARY EMBODIMENTS

Exemplary embodiments of the present invention are described herein with reference to the accompanying drawings in detail. The same reference numbers are used throughout the drawings to refer to the same or like parts. For the purpose of clarity and simplicity, detailed descriptions of well-known functions and structures incorporated herein may be omitted to avoid obscuring the subject matter of the present invention. Also, terms described below, which are defined considering functions in the present invention, can be different depending on user and operator's intention or practice. Therefore, the terms should be defined on the basis of the disclosure throughout this specification.

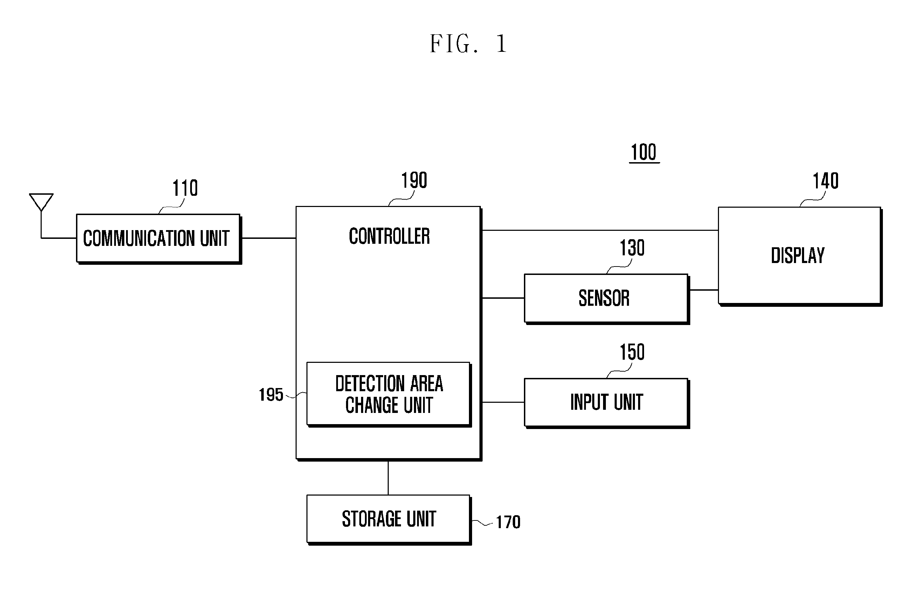

FIG. 1 is a block diagram illustrating a configuration of a display screen apparatus according to an exemplary embodiment of the present invention.

Referring to FIG. 1, a display screen apparatus 100 according to the present invention includes a sensor 130, a display 140, and a controller 190, and may further include a communication unit 110, an input unit 150, and a storage unit 170. Also, the controller 190 may include a detection area change unit 195.

When the display screen apparatus 100 according to the present invention is used in a terminal device such as a mobile phone, an MP3, a tablet PC, and a TV, the communication unit 110 performs a data transmission and receiving function for wired or wireless communication. When the display screen apparatus 100 of the present invention displays data transmitted or received wirelessly, the communication unit 110 may include an RF transmitter for performing frequency up conversion and amplification of a signal to be transmitted and an RF receiver for performing low noise amplification and frequency down conversion of a received signal. Also, the communication unit 110 may receive data through a wireless channel, output the data to the controller 190, and transmit the data output to the controller 190 through the wireless channel.

The sensor 130 may detect a deformation of the display. In the drawings, the sensor 130 is shown as a separate module from the display 140; however, in an actual embodiment, it is understood that the sensor 130 that detects the deformation of the display can be attached to or integrated with the display. The sensor 130 detects whether the display 140 is deformed at a predetermined amount or greater and outputs a result to the controller 190.

If the display 140 is deformed, physical force or physical pressure is applied to the sensor 130. When the sensor 130 experiences the physical pressure, the sensor 130 transmits an electrical signal corresponding to the physical pressure to the controller 190. The controller 190 receives the electrical signal from the sensor 130 indicating the deformation of the display 140 and if the amount of the deformation is greater than or equal to a preset threshold, the controller 190 may relocate or enlarge the item(s) near the folding line at which the deformation occurs. The sensor 130 can be implemented by one or more piezoelectric elements.

Alternatively, the sensor 130 can be implemented by a plurality of sensing elements, which sense changes of distances between themselves. If the display 140 is deformed, the distances between a sensing element located beside the folding line at which the deformation occurs and another sensing element also located beside the folding line becomes shorter. the sensing elements can detect the changes of distances between themselves via electromagnetic force or via other similar means.

The display 140 is flexible and can be formed in a liquid crystal display (LCD) or an organic light-emitting diode (OLED) for displaying data and images generated during the execution of a program. A flexible plastic film may be used as a substrate thereof.

The input unit 150 receives and detects an input signal and transfers the input signal to the controller 190. A touch panel may be used for the input unit 150 and, in that case, the input unit 150 may be formed integrally with the display 140. In other words, the input unit 150 and the display 140 may have a touch screen resulting in an input unit and a display integrated into one device.

The input unit 150 may be a keyboard for receiving a key manipulation of a user for controlling the display screen 100 or a device such as a mouse. In this case, the input unit 150 may be included in the display screen apparatus 100 or a separate module that transmits an input signal to the display screen apparatus 100.

The storage unit 170 stores programs and data needed for operating the display screen 100 and may include separately a program area and a data area. In the program area, at least one program, an operating system, and various application programs for controlling an overall operation of the display screen 100 may be stored. In the data area, values for settings that are used by the controller 190 in controlling the display screen 100 may be stored. For example, an object change range value corresponding to a slope at which the display is deformed may be a setting that is included.

The controller 190 controls an overall operation of each element of the display screen 100. The controller 190 displays one or more objects to be displayed on the screen such as an icon, a button, an item displayed in a list, or a text on the screen, for example. Also, when a signal for detecting deformation of the display 140 is received from the sensor 130, the controller 190 determines whether an object is displayed within a set range from a folding line at which the deformation is detected. A range of the object to be modified may be set in units of a pixel, a length, or an area. When it is determined that the object is displayed within the set range from the folding line, the controller 190 accordingly modifies the object to be displayed. More specifically, the controller 190 may modify a location and/or size of the object to be displayed.

In an exemplary embodiment where a location of an object is modified for display, the controller 190 may move the displayed object outwardly from the folding line and display the moved object. This is because an object that crosses over the folding line may not be easily recognizable by the user.

In an exemplary embodiment, when the size of the object is modified, the controller 190 may enlarge the size of the object and display the enlarged object on the display 150. When displaying the enlarged object on the display 150, the controller 190 may overlay the enlarged object to be displayed on a certain area and may display the enlarged object on the display 150 without a location change. The term 'overlay' refers to generating a separate layer and displaying the separate layer by overlapping an original layer. When the display is deformed, there may be a reduction in the perception of the enlarged object in a deformed portion, the controller 190 may display the enlarged object in an overlay in an area to be more easily perceived by the user.

In another exemplary embodiment, the controller 190 may enlarge or move the detection area for selecting the object displayed within the set range from the folding line. To this end, the controller 190 may include a detection area change unit 195. The detection area is an area for detecting an input for selecting the displayed object and an area that is set separately from an image, such as an icon or a button shown on the screen. When the display is deformed, the location of the object recognized by the user may be different from the actual location of the object displayed on the display. Therefore, by enlarging or moving the detection area by the detection area change unit 195, the input unit 150 detects a selection input even when the user may not accurately select the object due to the screen distortion.

When displaying the display screen, the above exemplary embodiments may be embodied individually or in a combination thereof. Namely, the controller 190 may enlarge or move the detection area while modifying each object to be displayed at the same time. Alternatively, the controller 190 may only enlarge or move the detection area without modifying the object displayed on the screen. Also, in the exemplary embodiments discussed above, the detection area change unit 195 is described as a separate unit, however, these examples are given for illustrative purposes only and do not necessarily mean that each function is performed by separate components. For example, a specific function performed by the detection area change unit 195 may be performed by the controller 190.

If the object is a distance away from the folding line by a certain range, the corresponding objects may maintain their display status without any change. Here, the range set from the folding line may have a different value according to a given slope at which the display is bent. For example, when the slope at which the display is bent is large, the range used for determining whether to modify the object may be increased. Namely, when the display is bent at a larger slope, the controller may modify the object included within a wider range from the folding line than in the case in which the display is bent at a smaller slope. When the deformation of the display has recovered with the modified object being displayed, the controller 190 may display the object at a location prior to the deformation and return the object to the shape of the object prior to the deformation.

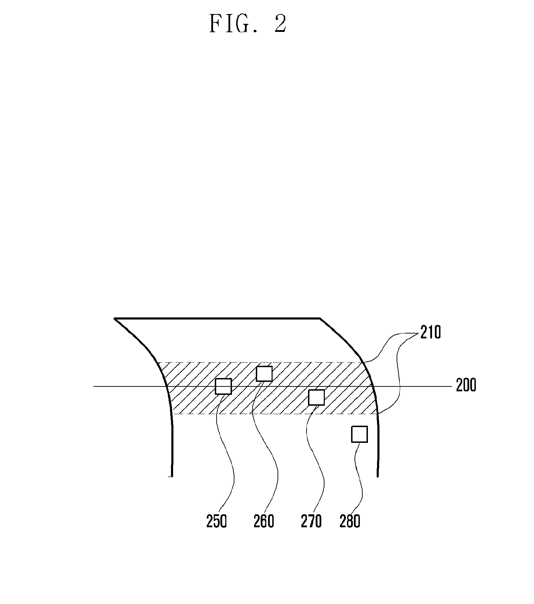

FIG. 2 is a perspective view illustrating a range of an object to which a method applies when a display is deformed according to an exemplary embodiment of the present invention.

Referring to FIG. 2, when the display is modified as FIG. 2, the controller 190 modifies objects 250, 260, 270 displayed within a shaded area of a range 210 set from the folding line 200. The range 210 is used for determining whether to modify the object and is determined with consideration to the perceptibility of the object according to the degree at which the display is bent. For example, the set range 210 may have a different value according to the slope at which the display is bent. An object 280 displayed outside the set range from the folding line 200 is determined not to be affected by the display deformation and is displayed on the display without any separate modification.

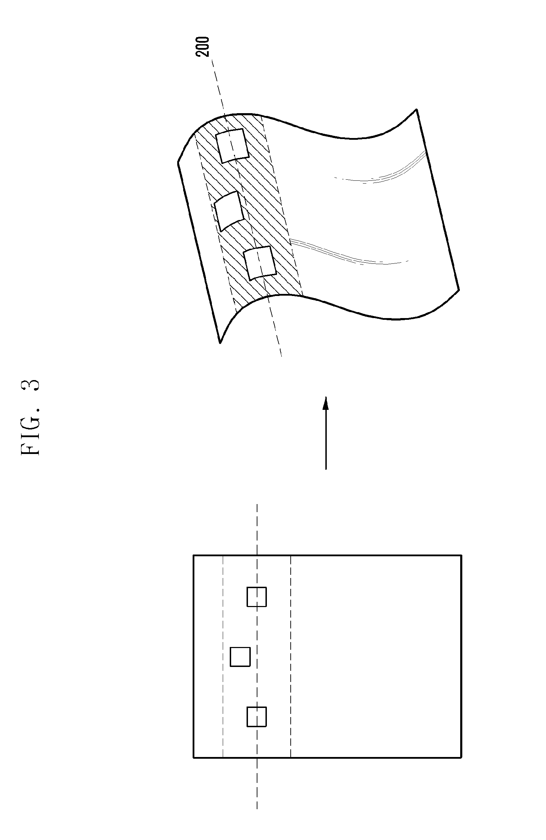

Hereinafter, referring to FIGS. 3 through 7, exemplary embodiments of the screen display methods of the present invention are described. For reference, all objects shown in FIGS. 3 through 7 are objects that are displayed within the set range from the folding line 200 to be modified according to the present invention.

FIG. 3 is a perspective view illustrating an exemplary embodiment in which a displayed objected is enlarged according to a method of the present invention.

Referring to FIG. 3, when a deformation is detected at the folding line 200, the controller 190 may enlarge the size of the object within the set range from the folding line 200 to be displayed. The size of the object may be controlled differently according to a degree of deformation of the display and the size of the object is preferably enlarged compared to a general display status so that the user may recognize the object more easily.

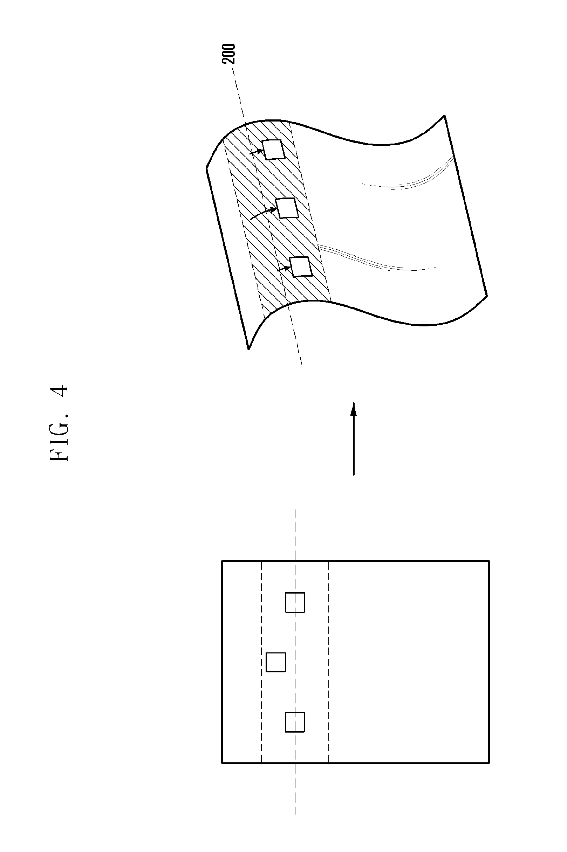

FIG. 4 is a perspective view illustrating an exemplary embodiment in which a displayed objected is moved according to a method of the present invention.

Referring to FIG. 4, when a deformation is detected at the folding line 200, the controller 190 may move the location of the object within the set range from the folding line 200. For example, the object on the folding line 200 may be moved outside the folding line 200. In the case of an object located at a center of the range in FIG. 4, the object is moved so as not to be located on the folding line 200, making the object more perceivable to the user. Such a location change may be modified by user settings and the controller 190 may determine the location change of the object based not only on whether the object is included within the set range from the folding line 200 but also the slope at which the display is bent and the values detected by other sensors (e.g., a gravity sensor, an acceleration sensor, etc.)

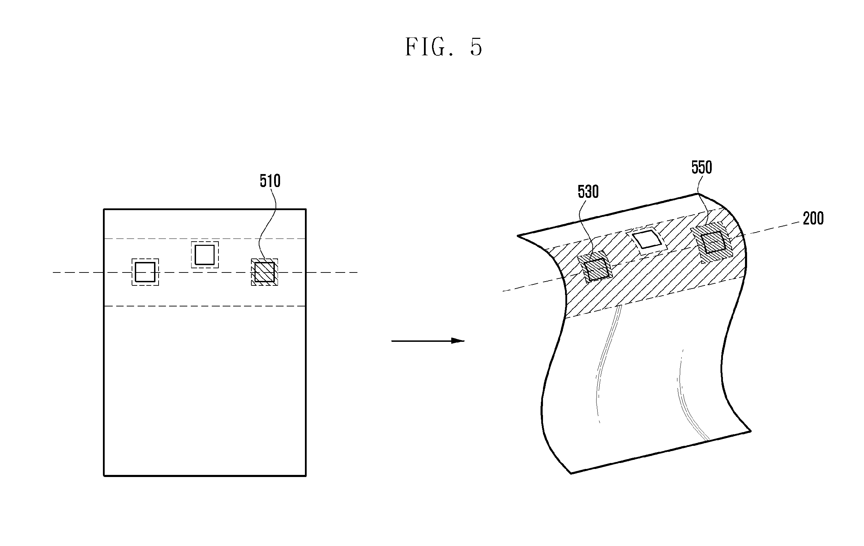

FIG. 5 is a perspective view illustrating an exemplary embodiment in which the detection range of a displayed object is enlarged or moved according to a method of the present invention.

Referring to FIG. 5, when deformation is detected at the folding line 200, the controller 190 may move or enlarge the detection area of the object within the set range from the folding line 200. A rectangle shown in a solid line in FIG. 5 indicates an object image such as an icon and the rectangle shown by the dotted line indicates a detection area for detecting an input to select the object. In the case of an object 530, the controller 190, due to the screen distortion, moves the detection area of object 530 by correcting a coordinate value thereof to a location where the object may be more accurately perceived to be located. In the case of an object 550, the controller 190 enlarges the detection area such that a corresponding object may be selected even when the user touches a neighboring portion of the displayed object.

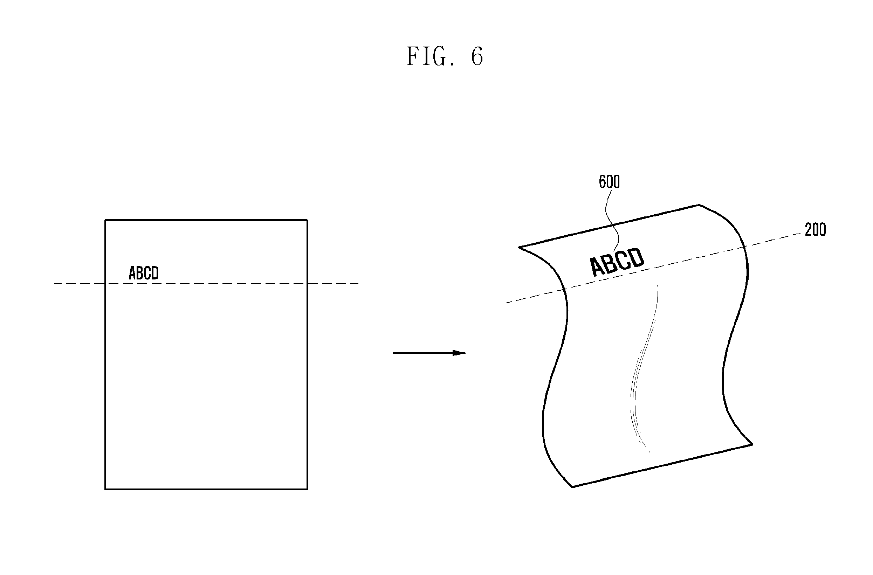

FIG. 6 is a perspective view illustrating an exemplary embodiment in which an enlarged object is displayed without a location change according to a method of the present invention.

Referring to FIG. 6, the controller 190 may enlarge a displayed character to be displayed without a location change. In case of text, a continuous sentence may be displayed on an entire screen without any margin. Therefore, the controller 190 may enlarge a text in a particular range to be displayed without a location change in order to prevent the perception of other text from being blocked, as shown by 600.

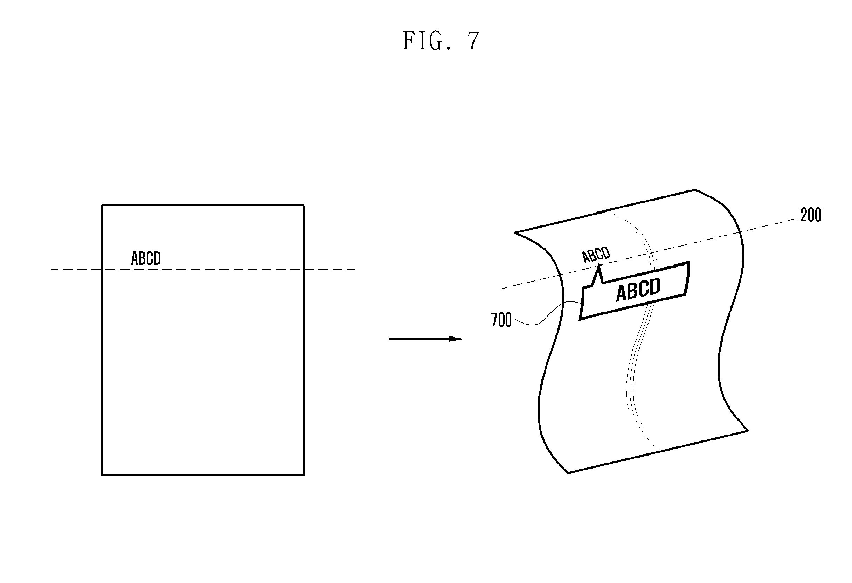

FIG. 7 is a perspective view illustrating an exemplary embodiment in which an enlarged object is displayed in overlay according to the invention.

Referring to FIG. 7, when displaying the enlarged object, the controller 190 may generate a separate layer to be displayed in a certain area. When the slope at which the display is bent is large, a bent portion may be outside of the field of view of the user. Therefore, in such a case, and as shown in FIG. 7, it is preferable to display an object in a new area by opening an auxiliary enlarging window 700. Therefore, the controller 190 may overlay the enlarged object in a certain area to be displayed by considering the degree of the display deformation and the type of the object.

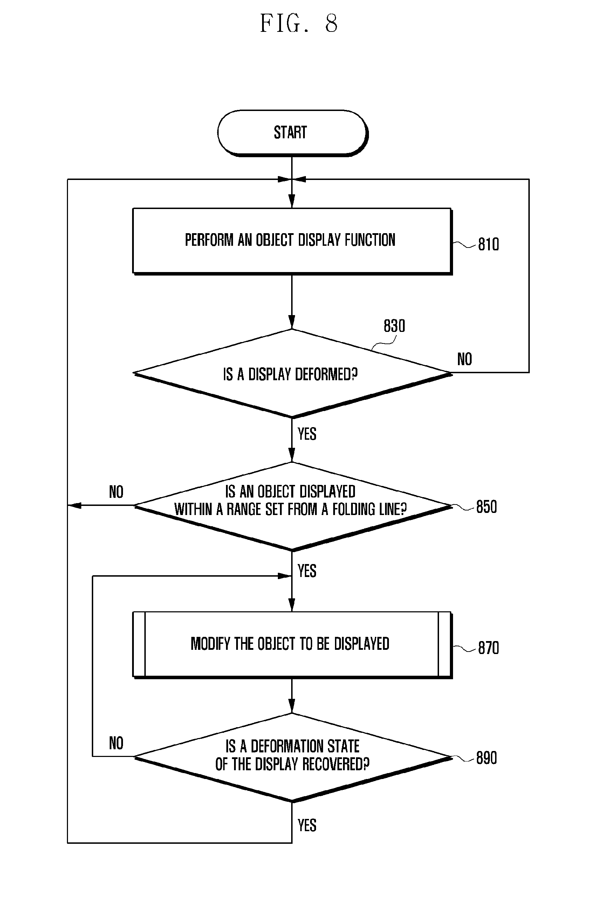

FIG. 8 is a flowchart illustrating an exemplary embodiment in which an object is modified according to a method of the present invention.

Referring to FIG. 8, the controller 190 may display the object on the screen by performing an object display function in step 810. When a signal for detecting the deformation of the display is received at step 830, the controller 190 determines whether the object is displayed within a set range from the folding line at which deformation is detected at step 850. When it is determined that the object is displayed within the set range from the folding line, the controller modifies the object to be displayed at step 870. If the displayed object is a distance away from the folding line by a predetermined range, the corresponding object may maintain a display status thereof without modification. Here, the range set from the folding line may have a different value according to a slope at which the display is bent. For example, when the slope at which the display is bent is large, the range that is the reference for object modification may be increased. In other words, in a case where the display is bent at a larger slope, the object modification may apply to an object included within a wider range from the folding line than in a case where the display is bent at a smaller slope. When the deformation state of the display has recovered at step 890 while the modified object is being displayed, the controller 190 may display the object at the location prior to the deformation and return the shape of the object to that prior to the deformation. Here, the object displayed on the display refers to an element displayed on the screen such as an icon, a button, an item displayed in a list, or a text, and the like. The type of object to which the present invention applies does not have specific limits.

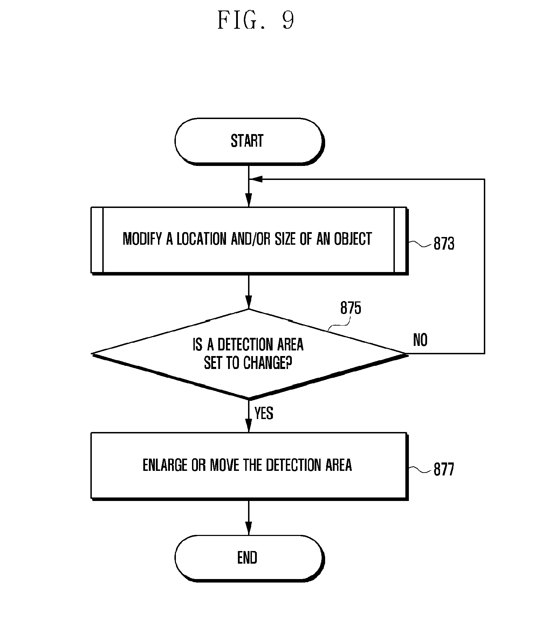

FIG. 9 is a flowchart illustrating a process of modifying an object to be displayed in a method according to an exemplary embodiment of the present invention.

Referring to FIG. 9, step 870 (Fig. 8) for modifying the object to be displayed may include the following steps. First, the controller 190 may modify a location and/or size of the object to be displayed at step 873. When modifying the location of the object to be displayed, the object that crosses over the folding line may be difficult to perceive by the naked eye and, therefore, the controller may move the displayed object outside the folding line. Also, when the detection area is set to change at step 875, the controller may enlarge or move the detection area at step 877. The detection area is an area for detecting an input in order to select the displayed object and in an area set separately from an image of an icon or a button shown on the screen, for example. When the display is modified, the location of the object perceived by the user and the location of the object actually displayed on the display may be different from each other. Therefore, the controller 190 may enlarge or move the detection area so that the input unit may detect the selection input even when the user may not accurately select the object due to the screen distortion.

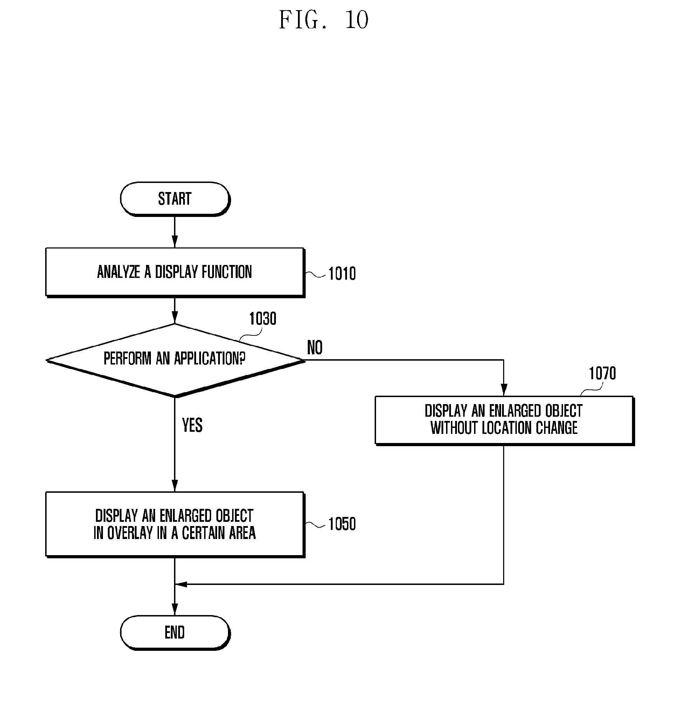

FIG. 10 is a flowchart for illustrating in detail a process of modifying the size of an object to be displayed in a method according to an exemplary embodiment of the present invention. As described with respect to FIG. 9, the controller 190 modifies the location and/or size of the object to be displayed, thereby enabling the user to accurately identify the object displayed in the deformed portion. Referring to FIG. 10, in an exemplary embodiment in which the size of the object is modified to be displayed, the controller 190 may enlarge the size of the object in step 1010. The controller 190 determines whether the object is set to be displayed in an overlay at step 1030. When the overlay is set; the enlarged object may be displayed in an overlay in a certain area at step 1050. The overlay means generating a separate layer and displaying the separate layer by overlapping an original layer. When the display is deformed, an object displayed in the deformed portion may be difficult to be perceived such that the controller 190 may display the enlarged object in an overlay in an area to be more easily perceived by the user. When it is determined that the overlay is not set at step 1030, the controller 190 may display the enlarged object without a location change in step 1070. In other words, the controller 190 may enlarge the size of the original object to be displayed without using a separate layer.

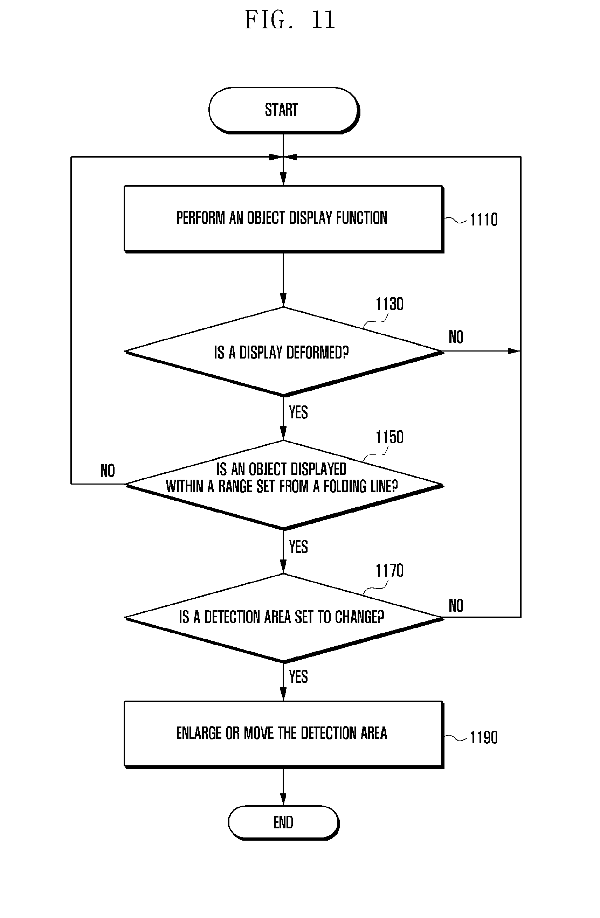

FIG. 11 is a flowchart illustrating a process of enlarging or moving a detection area in a method according to another exemplary embodiment of the present invention.

Referring to FIG. 11, first, the controller 190 performs an object display function to display an object on the screen at step 1110. When a signal for detecting the deformation of the display is received at step 1130, the controller 190 determines whether the object is displayed within the set range from the folding line at which the deformation is detected in step 1150. When it is determined that the object is displayed within the set range from the folding line, the controller 190 determines whether the detection area is set to change in step 1170. When it is determined that the detection area is set to change, the controller 190 enlarges or moves the detection area, thereby enabling an accurate detection of a selection input of the user at step 1190.

As described above, according to the present invention, a user's ability to perceive an object may be maintained even when a display is modified.

Also, according to the present invention, when the display is modified, a selection input according to the user's intent may be accurately detected, thereby improving the operability and the overall feel of the flexible display.

Although exemplary embodiments of the present invention have been described in detail hereinabove, it should be clearly understood that many variations and modifications of the basic inventive concepts herein taught which may appear to those skilled in the present art will still fall within the spirit and scope of the present invention, as defined in the appended claims.

The above-described methods according to the present invention can be implemented in hardware, firmware or as software or computer code that can be stored in a recording medium such as a CD ROM, an RAM, a floppy disk, a hard disk, or a magneto-optical disk or downloaded over a network and stored on a non-transitory machine readable medium, so that the methods described herein can be rendered in such software using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

## Claims

1. A method of displaying a display screen by using a display that is flexible, the method comprising:
detecting a deformation of the display;
determining whether an object is displayed within a set range from a folding line at which the deformation is detected; and
modifying the displayed object and displaying a modified displayed object when the object is displayed within the set range.

2. The method according to claim 1, wherein modifying the displayed object comprises:
modifying and displaying a location and/or a size of the modified displayed object.

3. The method according to claim 2, further comprising:
enlarging or moving a detection area for detecting an input for selecting the displayed object.

4. The method according to claim 2, wherein modifying and displaying the location and/or the size of the displayed object comprises:
enlarging the size of the displayed object; and
displaying an enlarged object.

5. The method according to claim 4, wherein displaying the enlarged object comprises:
displaying the enlarged object without a location change or displaying the enlarged object in an overlay in a certain area.

6. The method according to claim 2, wherein modifying and displaying the location and/or the size of the displayed object comprises:
moving the displayed object outside the folding line and displaying a moved displayed object.

7. The method according to claim 1, wherein the set range has a different value depending on a slope at which the display is bent.

8. A method of displaying a display screen by using a display that is flexible, the method comprising:
detecting a deformation of the display;
determining whether an object is displayed within a set range from a folding line at which the deformation is detected; and
enlarging or moving a detection area for detecting an input to select the displayed object when the object is displayed within the set range.

9. An apparatus for displaying a display screen using a display that is flexible, the apparatus comprising:
the display that is flexible;
a sensor configured to detect a deformation of the display; and
a controller configured to determine whether an object is displayed within a set range from a folding line at which the deformation is detected and configured to modify the displayed object and displaying a modified displayed object on the display when the object is displayed within the set range.

10. The apparatus according to claim 9, wherein the controller is configured to modify a location and/or a size of the displayed object.

11. The apparatus according to claim 10, wherein the controller comprises a detection area change unit configured to enlarge or move the detection area for detecting the input for selecting the displayed object.

12. The apparatus according to claim 10, wherein the controller enlarges the size of the displayed object and displays an enlarged object on the display.

13. The apparatus according to claim 12, wherein, displaying the enlarged object on the display, the controller displays the enlarged object without a location change or displays the enlarged object in an overlay in a certain area.

14. The apparatus according to claim 10, wherein the controller moves the displayed object outside the folding line to be displayed on the display.

15. The apparatus according to claim 9, wherein the set range has a different value depending on a slope at which the display is bent.
